# EUROPÄISCHE PATENTSCHRIFT

(11) **EP 1 563 041 B1**
(45) Veröffentlichungstag und Bekanntmachung des Hinweises auf die Patenterteilung: **02.07.2008**
(21) Anmeldenummer: 03810944.3
(22) Anmeldetag: 08.07.2003
(51) Int. Cl.: C10L 1/02, C10L 1/18

(54) **VERWENDUNG VON 2,6-DI-TERT.-BUTYL-P-KRESOL ZUR ERHÖHUNG DER LAGERSTABILITÄT VON BIODIESEL**
USE OF 2,6-DI-TERT.-BUTYL-P-CRESOL FOR INCREASING THE STORAGE STABILITY OF BIODIESEL
UTILISATION DE 2,6-TERT.-BUTYL-P-CRESOL POUR ACCROITRE LA STABILITE AU STOCKAGE D'UN BIODIESEL

(30) Priorität: 13.11.2002 DE 10252715; 13.11.2002 DE 10252714
(43) Veröffentlichungstag der Anmeldung: 17.08.2005
(73) Patentinhaber: LANXESS Deutschland GmbH, 51369 Leverkusen (DE)
(72) Erfinder: INGENDOH, Axel, 51519 Odenthal (DE); ROTHER, Christian, 51519 Odenthal (DE); HEISE, Klaus-Peter, 51519 Odenthal (DE)
(86) Internationale Anmeldenummer: PCT/EP2003/007310
(87) Internationale Veröffentlichungsnummer: WO 2004/044104

(56) Entgegenhaltungen:
- EP-A- 0 626 442
- US-A- 4 769 178

## Beschreibung

Die Erfindung betrifft ein Verfahren zur Erhöhung der Lagerstabilität von Biodiesel sowie die Verwendung von 2,6-Di-tert.-butyl-p-kresol (nachfolgend BHT genannt) zur Erhöhung der Lagerstabilität von Biodiesel.

Biodiesel, der heutzutage in zunehmenden Maße als Ersatz für Petroleumdiesel als Kraftstoff für Dieselmotoren und Kraftwagen, Blockheizkraftwerken, Schiffen und Booten sowie stationäre Dieselmotoren von Kraftfahrzeugen eingesetzt wird, besteht chemisch aus Fettsäurealkylestern. Vorwiegend handelt es sich dabei um Fettsäuremethylester. Gewonnen wird Biodiesel dabei durch eine sogenannte Umesterung, bei dem pflanzliche Öle wie Rapsöl, Sojaöl, Palmöle und andere Pflanzenöle aber auch Altspeiseöle oder tierische Fette mit Methanol in Gegenwart eines Katalysators (zumeist Natronlauge) umgesetzt werden. Als weiteres Produkt neben dem als Biodiesel einsetzbaren Fettsäuremethylester fällt dabei noch Glycerin an. Diese Herstellung von Biodiesel, auch als CD-Verfahren bezeichnet, ist in mehreren Patentanmeldungen beschrieben (DE-A 4 209 779, US-A 5 354 878, EP-A-56 25 04).

Da die Bedeutung von Biodiesel in jüngster Zeit als alternativer Kraftstoff für Dieselmotoren immer mehr an Bedeutung gewonnen hat, hat im entsprechenden Maße auch die Produktion von Biodiesel in den letzten Jahren immer mehr zugenommen. Ein Nachteil gegenüber mineralischen Kraftstoffen bleibt aber immer noch die geringere Lagerstabilität von Biodiesel. Dieses bedingt der hohe Gehalt an ungesättigten Fettsäureestern im Biodiesel, der im Laufe der Zeit durch den Abbau der ungesättigten Fettsäureester zu kurzkettigen Produkten den Energiewert dieses alternativen Kraftstoffes immer weiter vermindert und zu Ausfällungen, erkennbar als Trübung des Biodiesel führt. Weitere Folgen dieses Fettsäure-methylester-Abbaus sind hinlänglich bekannt und sie entstehen nach dem gleichen Abbauweg wie bei Fettsäure-glyzerinestern der Fette und Öle, Die entstandenen Abbauprodukte sind Peroxide, Aldehyde und kurzkettige freie Fettsäuren, die anscheinend lösliche und unlösliche Polymere als Ausfällungen bilden. Einspritzsysteme, Pumpen und Düsen von Dieselmotoren sind empfindliche Bauteile, die leicht durch Säuren korrodiert werden können. Die gebildeten vernetzten unlöslichen Polymere im Biodiesel können die Düsen verstopfen und zu schwerlöslichen Ablagerung führen. Dadurch wird die Funktionsfähigkeit der Dieselmotoren erheblich eingeschränkt. Außerdem bewirken die durch oxidativen Abbau gebildeten löslichen und unlöslichen Polymeren aus den gesamten Abbauprodukten eine unvollständige Verbrennung mit Rußbildung, was gegebenenfalls zu Motorschäden führen kann. Alle diese Abbauprodukte sollten daher im Biodiesel nicht vorhanden sein. Freie Fettsäure wirken korrosiv auf die Metalle des Motors und der Einspritzsysteme und reduzieren die Lebensdauer und Leistungsfähigkeit des Motors. Der Einsatz dieses alternativen Energieträgers aus nachwachsenden Rohstoffen als Kraftstoff für Automobile macht daher die Erhöhung der Lagerstabilität von Biodiesel unbedingt erforderlich.

Der Einsatz von Antioxidantien wie zum Beispiel sterisch gehinderten Phenolen für umgeesterte Fette und Öle bzw. Agentien, die umgeesterte Fette und Öle enthalten, ist prinzipiell bereits aus EP 0 626 442 und US 4,769,178 bekannt.

Aufgabe der vorliegenden Erfindung war es, die Lagerstabilität von Biodiesel, also von Fettsäurealkylestern deutlich zu erhöhen.

Unter "Lagerstabilität" wird dabei eine verminderte Trübung des Biodiesels verstanden, die daraus resultiert, dass die durch oxidative Prozesse im Biodiesel entstandenen Abbauprodukte zu löslichen und unlöslichen Polymeren reagieren und ausfallen.

Gefunden wurde nun, dass 2,6-Di-tert.-butyl-p-kresol , die Lagerstabilität von Biodiesel deutlich erhöht.

Gegenstand der Erfindung ist daher ein Verfahren zur Erhöhung der Lagerstabilität von Biodiesel, bei dem man eine flüssige Stammlösung, welche, bezogen auf die Stammlösung, 10 - 60 Gew.-% BHT, gelöst in Biodiesel enthält, zum zu stabilisierenden Biodiesel bis zur einer Konzentration von 0,005 bis 2 Gew.-% BHT, bezogen auf die gesamte Lösung an Biodiesel, zudosiert.

Unter "Biodiesel" werden dabei alle als Biodiesel-Treibstoff einsetzbaren gesättigten und ungesättigten Fettsäurealkylester, insbesondere Fettsäuremethylester verstanden, wie sie üblicherweise unter dem Begriff Biodiesel für den Einsatz als Kraftstoff in Automobilen für Dieselmotoren und Kraftwagen, Blockheizkraftwerken, Schiffen und Booten sowie stationäre Dieselmotoren angeboten werden. Üblicherweise sind die als Biodiesel eingesetzten Fettsäuremethylester C₁₄-C₂₄-Fettsäuremethylester, die sowohl rein als auch im Gemisch vorliegen können. Die im erfindungsgemäßen Verfahren eingesetzten Biodiesel können darüber hinaus alle üblichen Zusatzstoffe, wie sie z.B. zur Erhöhung der Winterstabilität von Biodiesel zugesetzt werden, enthalten. Üblicherweise entstammen die durch das erfindungsgemäße Verfahren in ihrer Lagerstabilität verbesserten Biodiesel einem Umesterungsverfahren mit Methanol, und pflanzlichen Ölen, wie Rapsöl, Sojaöl, Palmöl oder Altspeiseölen und -fetten oder tierischen Fetten. Vorzugsweise wird Biodiesel erfindungsgemäß stabilisiert, welcher durch die genannte Umesterung aus Rapsöl oder Sojaöl gewonnen wurde.

Ein weiterer Gegenstand der Erfindung ist ein Verfahren zur Herstellung einer flüssigen Stammlösung für den Einsatz in einem Verfahren zur Erhöhung der Lagerstabilität von Biodiesel, bei dem man bei einer Temperatur im Bereich von 70 bis 120°C, bevorzugt 90 bis 120°C, verflüssigtes, gegebenenfalls destilliertes BHT unter Rühren zu Biodiesel bis zur einer Konzentration von 15 bis 60 Gew.-% BHT, bezogen auf die gesamte Stammlösung, zudosiert.

BHT ist bei Raumtemperatur ein Feststoff, der sich bei Raumtemperatur nur unter erhöhten Aufwand dem Biodiesel zudosieren lässt. Die erfindungsgemäße Stammlösung enthaltend 15 bis 60 Gew.-% BHT, bevorzugt 20 bis 40 Gew.-% BHT, ist als hochkonzentrierte Lösung von BHT in Biodiesel flüssig und dosierfähig und kann dem zu stabilisierenden Biodiesel sehr leicht zudosiert werden. Auch nach längerer Zeit ist überraschenderweise kein Ausfällen von BHT aus dieser hochkonzentrierten Stammlösung festzustellen.

Üblicherweise wird die genannte Stammlösung dem zu stabilisierenden Biodiesel bis zu einer Konzentration von 0,005 Gew.-% bis 2 Gew.-%, bevorzugt 0,1 bis 1 Gew.-%, bezogen auf die gesamte Lösung an Biodiesel, zudosiert. Es können auch höhere Konzentrationen an BHT dem Biodiesel zugesetzt werden. Die größten Stabilitätseffekte werden bis zu einer Konzentration von 2 Gew.-% beobachtet. Im Vergleich zum nichtstabilisierten Biodiesel zeigt der erfindungsgemäß stabilisierte Biodiesel ein erheblich verbesserte Lagerstabilität, d.h. dass im erfindungsgemäß stabilisierten Biodiesel keine unerwünschten Ausfällungen aus durch oxidativen Abbau erzeugten unlöslischen Polymeren beobachtet werden. Weiterhin wurde festgestellt, das BHT in vorteilhafter Weise zu einer Erhöhung des Stockpunktes des Biodiesels führt. Unter "Stockpunkt" wird dabei die Temperatur verstanden, bei der Biodiesel beginnt auszukristallisieren.

BHT wird zur Erhöhung der Lagerstabilität von Biodiesel durch Vermeidung der Trübung von Biodiesel durch diese Oxidationsprozesse gebildete Abbauprodukte verwendet. Die Trübung zeigt sich in Form von Ausfällungen. Erfindungsgemäß kann nun verhindert werden, dass diese Ausfällungen Motordüsen verstopfen oder unerwünschte Ablagerungen im Motorinnenraum (Kolben, Leitungen) durch unvollständige Verbrennung erzeugen, die zu Motorschäden rühren kann.

Der lagerstabilisierte Biodiesel selbst enthält 0,005 bis 2 Gew.-% gelöstes BHT.

### Beispiele

### Beispiel 1-5

Biodiesel (aus Rapsöl) wurde, mit steigenden Mengen BHT (Handelsprodukt der Bayer AG: Baynox^{®}) versetzt, einem Ranzimattest unterzogen.

### Durchführung des Ranzimattest:

Der Ranzimat 679 (Fa. Metrohm) besteht aus einem Steuerteil und einem Nassteil. Im Nassteil werden die Proben erhitzt und in Gegenwart von Kupfer von Luft durchblasen. Während der oxidativen Alterung entstehen niederkettige, flüchtige organische Säuren, die in einer mit destilliertem Wasser gefüllten Messzelle eingeleitet werden. Dort wird die Leitfähigkeit kontinuierlich erfasst und aufgezeichnet.

Das Ende der Alterung bzw. oxidativen Stabilität zeigt sich durch einen steilen Anstieg der Leitfähigkeit an. Die Zeit bis zum Erreichen des Knickpunktes wird als Induktionsperiode bezeichnet und dient als Maß für die Alterungsstabilität.

Im folgenden Beispiel wurden alle Proben der gleichen Versuchsanforderung unterworfen.

Dauer: 120 Minuten bei 70°C unter Durchleitung von 60 ml/h Luft/Std.

Danach wurden die Proben mittels GC Analytik auf ihren Gehalt an ungesättigten Fettsäure-methylestern untersucht. Die folgende Tabelle zeigt die Ergebnisse:

| | | | | | | | |
|---|---|---|---|---|---|---|---|
| Fettsäuremethylester | Biodiesel Ölmühle Leer Rapsölmethylester | Vgl.-Beispiel BHT 0,0 Gew.-% | Beispiel 1 BHT 0,02 Gew.-% | Beispiel 2 BHT 0,04 Gew.-% | Beispiel 3 BHT 0,06 Gew.-% | Beispiel4 BHT 0,08 Gew.-% | Beispiel 5 BHT 0,1 Gew.-% |
| C16/ 1x Doppelb. | | 0,2 | 0,2 | 0,2 | 0,3 | 0,2 | 0,3 |
| C18/ 2 x Doppelb. | 21,6 | 0,4 | 0,9 | 2,3 | 3,7 | 5,5 | 11,3 |
| C18/ 1 x Doppelb. | 67,4 | 43,7 | 50,8 | 58,0 | 60,5 | 62,7 | 64,9 |
| C22 / 1 x Doppelb. | 0,2 | 1,3 | 1,6 | 1,7 | 1,8 | 1,7 | 1,7 |
| C24/ 1 x Doppelb. | | 0,3 | 0,3 | 0,2 | 0,2 | 0,2 | 0,2 |

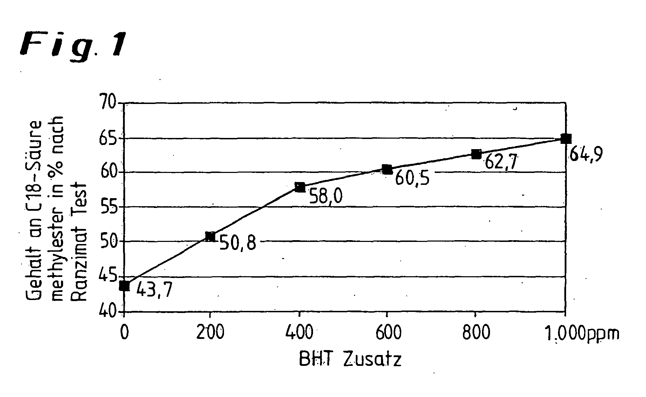

Fig. 1 zeigt die Ergebnisse in graphischer Form.

Die Ergebnisse zeigen:

Je höher der Gehalt an BHT in der Probe war, desto größer ist der Anteil an mehrfach ungesättigten Fettsäure-methylestern. Die nicht mit BHT versetzte Probe zeigt einen starken Abbau der ungesättigten Fettsäuremethylester von der BHT Konzentration ist signifikant. BHT vermag den Abbau ungesättigter Fettsäuremethylester im Biodiesel dosenabhängig zu hemmen.

In einem 5-1-Kolben mit engem Hals wurden 2 l Biodiesel eingefüllt, in einem zweiten gleichen Gefäß die gleiche Menge aber mit 0,05 % BHT versetzt. Die Gefäße wurden nicht verschlossen und bei Raumtemperatur unter gelegentlichem Umschütteln (2-3 mal pro Woche) stehen gelassen. Nach ca. 6 Wochen zeigt sich eine erste Trübung im nicht mit BHT versetzten Produkt. Nach einer weiteren Woche war die Trübung durch unlösliche Polymere deutlich zu erkennen.

Im Ansatz mit Zusatz von BHT trat auch nach 8 Wochen keinerlei Trübung durch unlösliche Polymere auf.

### Beispiele 6-8

Zur Beurteilung der Oxidationsstabilität von Biodiesel (aus Rapsöl) wurden folgende Messmethoden durchgeführt:

### Messmethoden:

Biodiesel wurde mit Sauerstoff unter Druck (10 bar) mit der Methode DTA (Differenzial Thermoanalyse gemäß DIN Nr. 51007) untersucht. Dazu wurde reiner Biodiesel und Biodiesel mit steigenden Mengen BHT versetzt, in die Versuchsanordnung eingesetzt.

Die Bestimmung des Wärmestroms zu einer Probe, relativ gemessen zu einer Referenzprobe, die beide einem definierten Temperaturprogramm unterliegen, ist Grundlage der dynamischen Differential-Thermoanalyse (eng.: Differential-Scanning-Calorimetrie, DSC). Mittels dieser Methode lassen sich spezifische Wärme, Glasumwandlung, Schmelz- und Kristallisationsverhalten, thermische Effekte, Reinheit, Polymorphie, chemische Reaktionen und Reaktionskinetik bestimmen. In den meisten Fällen wird ein dynamisches Temperaturprogramm durchlaufen, d.h. der interessierende Temperaturbereich wird überstrichen.

### Vergleichsbeispiel 2 und Beispiele 6 bis 8

| | Biodiesel [mg] | BHT [Gew.-%]* | Sauerstoff [mg] | Heizrate [K/min] | Beginn der Oxidation [°C] | freigesetzte Energie [J/g] |
|---|---|---|---|---|---|---|
| Vergleichsbeispiel 2 | 100 | - | 10 | 1 | 59 | 490 |
| Beispiel 6 | 100 | 0,1 | 10 | 1 | 97 | 510 |
| Beispiel 7 | 100 | 1,0 | 10 | 1 | 104 | 580 |
| Beispiel 8 | 100 | 5,0 | 10 | 1 | 104 | 430 |

| | | | | | | |
|---|---|---|---|---|---|---|
| * bezogen auf die eingesetzte Menge Biodiesel | | | | | | |

### Bewertung der Beispiele 6 bis 8

Das Vergleichsbeispiel 2 (Biodiesel ohne BHT) zeigte in der DTA bei Zusatz von reinem Sauerstoff (ca. 10 bar) schon ab ca. 60°C den Beginn der stark exothermen Oxidationsreaktion.

In den Beispielen 1 bis 3 wurde der Biodiesel mit verschiedenen BHT-Zusätzen unter Sauerstoffzusatz gemessen. Hierbei zeigt sich das schon bei einem Zusatz von 0,1 % BHT die Oxidationsreaktion erst ab 97°C einsetzt, wobei diese mit einer deutlich höheren Wärmeproduktionsrate verläuft. Durch Erhöhung der BHT-Menge auf 1 % wird nur noch eine geringfügige zusätzliche Stabilisierung erzielt, d.h. die Oxidation setzt hier erst ab 104°C ein. eine weitere Erhöhung der BHT-Menge auf 5 % bewirkt keine Erhöhung der Stabilität.

### Beispiel 9

### Herstellung der Lösung von BHT in Biodiesel

In einem zwei Liter Rührkolben werden 1.500 ml Biodiesel bei Raumtemperatur gerührt. 300 g BHT flüssig werden aus einem mit Dampf oder Wasser auf 80 bis 90°C geheizten Tropftrichter innerhalb 10 Minuten so zudosiert, dass das BHT sofort in Lösung geht.

Danach wird auf Raumtemperatur abgekühlt und zur Abgabe in einen 21,5 1 Metallkanister über einen Filter umgefüllt.

Die 20 % g/l Lösung zeigt auch nach zweiwöchigem Aufbewahren bei 0°C keinerlei Trübung und Ausfällungen.

### Beispiel 10

### Vermeidung von Ausfällungen

Aus der gleichen Probe Biodiesel wurden je 2 1 in zwei verschiedene großvolumige 5 1-Gefäße gefüllt, so dass die Gefäße jeweils nur halb gefüllt waren und der Biodiesel eine möglichst große Oberfläche hat.

Im Gefäß P5-0.0 wurde kein BHT zugesetzt, im Gefäß P5 -0,05 wurden 500 ppm BHT zugesetzt.

Nach 30 Tagen bei Raumtemperatur im verschlossenen Gefäß zeigt sich im Gefäß P5-0.0 ohne BHT Zusatz eine deutliche Trübung, die von vernetzten unlöslichen Polymeren des Biodiesel herrührt. Dahingegen blieb der Biodiesel im Gefäß P5-0,05 mit 500 ppm BHT vollkommen klar und durchsichtig, keinerlei unlösliche Polymere fielen aus.

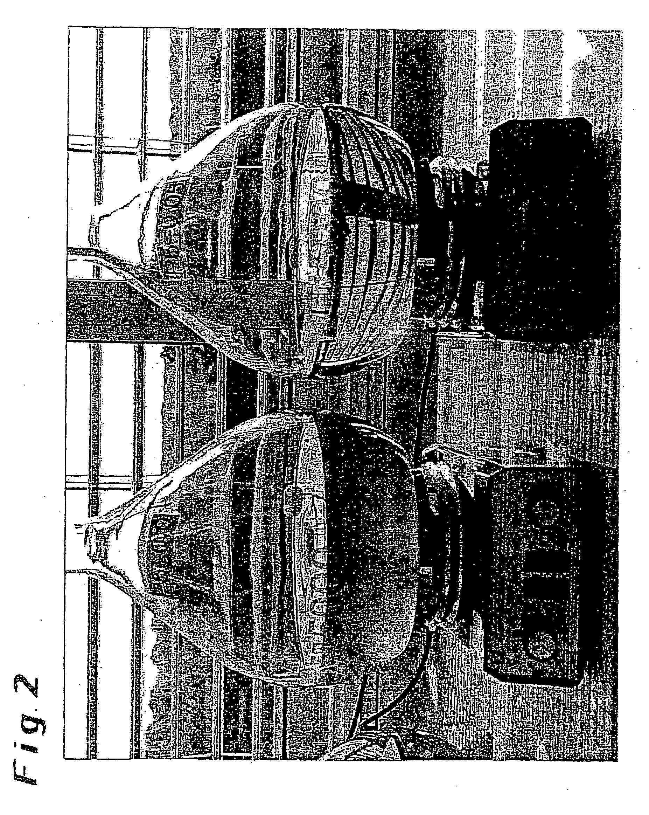

In Fig. 2 ist das Ergebnis dargestellt.

## Patentansprüche

1. Verfahren zur Erhöhung der Lagerstabilität von Biodiesel, **dadurch gekennzeichnet, dass** man eine flüssige Stammlösung, welche, bezogen auf die Stammlösung 15 bis 60 Gew.-% 2,6-Di-tert.-butyl-p-kresol in Biodiesel gelöst enthält, zum zu stabilisierenden Biodiesel bis zu einer Konzentration von 0,005 bis 2 Gew.-% 2,6-Di-tert.-butyl-p-kresol, bezogen auf die gesamte Lösung an Biodiesel, zudosiert.

2. Verfahren nach Anspruch 1, **dadurch gekennzeichnet, dass** man die Stammlösung dem Biodiesel bis zu einer Konzentration von 0,1 bis 1 Gew.-% 2,6-Di-tert.-butyl-p-kresol, bezogen auf die gesamte Lösung an Biodiesel, zudosiert.

3. Verfahren nach Anspruch 1 oder 2, **dadurch gekennzeichnet, dass** der Biodiesel ein durch die Umesterung mit Methanol aus Rapsöl, Sojaöl, Palmöl, Altspeiseöl oder tierischem Fett gewonnener Biodiesel ist.

4. Verfahren zur Herstellung einer flüssigen Stammlösung aus 2,6-Di-tert.-butyl-p-kresol, Biodiesel und eventuell weiteren Additiven für den Einsatz in einem Verfahren zur Erhöhung der Lagerstabilität von Biodiesel, **dadurch gekennzeichnet, dass** man bei einer Temperatur im Bereich von 70 bis 120°C verflüssigtes 2,6-Di-tert.-butyl-p-kresol unter Rühren zu Biodiesel bis zu einer Konzentration von 15 bis 60 Gew.% 2,6-Di-tert.-butyl-p-kresol, bezogen auf die Stammlösung, zudosiert.

5. Flüssige Stammlösung enthaltend, bezogen auf die gesamte Stammlösung, 15 bis 60 Gew.-% 2,6-Di-tert.-butyl-p-kresol gelöst in Biodiesel.

## Claims

1. Process for increasing the storage stability of biodiesel, **characterized in that** a liquid stock solution which, based on the stock solution, comprises 15 to 60% by weight of 2,6-di-tert-butyl-p-cresol dissolved in biodiesel is metered into the biodiesel to be stabilized up to a concentration of 0.005 to 2% by weight of 2,6-di-tert-butyl-p-cresol, based on the overall solution of biodiesel.

2. Process according to Claim 1, **characterized in that** the stock solution is metered into the biodiesel up to a concentration of 0.1 to 1% by weight of 2,6-di-tert-butyl-p-cresol, based on the overall solution of biodiesel.

3. Process according to Claim 1 or 2, **characterized in that** the biodiesel is a biodiesel which has been obtained by transesterification with methanol from rapeseed oil, soya oil, palm oil, used cooking oil or animal fat.

4. Process for preparing a liquid stock solution of 2,6-di-tert-butyl-p-cresol, biodiesel and any further additives for use in a process for increasing the storage stability of biodiesel, **characterized in that** liquefied 2,6-di-tert-butyl-p-cresol is metered at a temperature in the range from 70 to 120°C with stirring into biodiesel up to a concentration of 15 to 60% by weight of 2,6-di-tert-butyl-p-cresol, based on the stock solution.

5. Liquid stock solution comprising, based on the overall stock solution, 15 to 60% by weight of 2,6-di-tert-butyl-p-cresol dissolved in biodiesel.

## Revendications

1. Procédé en vue de l'augmentation de la stabilité de stockage de biodiesel, **caractérisé en ce que** l'on ajoute par dosage, au biodiesel à stabiliser, une solution-mère liquide, qui contient sous forme dissoute, par rapport à la solution-mère, de 15 à 60 % en poids de 2,6-di-tert.-butyl-p-crésol dans le biodiesel, jusqu'à une concentration de 0,005 à 2 % en poids de 2,6-di-tert.-butyle-p-crésol, par rapport à la solution globale de biodiesel.

2. Procédé selon la revendication 1, **caractérisé en ce que** l'on ajoute par dosage au biodiesel la solution-mère jusqu'à une concentration de 0,1 à 1 % en poids de 2,6-di-tert.-butyl-p-crésol, par rapport à la solution globale de biodiesel.

3. Procédé selon la revendication 1 ou 2, **caractérisé en ce que** le biodiesel est un biodiesel obtenu par la transestérification à l'aide de méthanol d'huile de colza, d'huile de soja, d'huile de palme, d'huile alimentaire usagée ou de graisse animale.

4. Procédé en vue de la fabrication d'une solution-mère liquide à partir de 2,6-di-tert.-butyl-p-crésol, de biodiesel et éventuellement d'additifs supplémentaires pour une utilisation dans un procédé en vue de l'augmentation de la stabilité du biodiesel, **caractérisé en ce que** l'on ajoute par dosage, à une température dans la plage de 70 à 120°C, du 2,6-di-tert.-butyl-p-crésol liquéfié sous agitation au biodiesel, jusqu'à une concentration de 15 à 60 % en poids de 2,6-di-tert.-butyl-p-crésol, par rapport à la solution-mère.

5. Solution-mère liquide contenant, par rapport à la solution-mère globale, de 15 à 60 % en poids de 2,6-di-tert.-butyl-p-crésol dissous dans le biodiesel.
